# EUROPÄISCHE PATENTSCHRIFT

(11) **EP 0 770 326 B1**
(45) Veröffentlichungstag und Bekanntmachung des Hinweises auf die Patenterteilung: **18.02.1998**
(21) Anmeldenummer: 96116719.4
(22) Anmeldetag: 17.10.1996
(51) Int. Cl.: A01K 5/00, A01D 90/10

(54) **Futtermischwagen**
A mixer feeder wagon
Wagon mélangeur et distributeur

(30) Priorität: 23.10.1995 DE 19539339
(43) Veröffentlichungstag der Anmeldung: 02.05.1997
(73) Patentinhaber: Mayer, Georg, 84529 Tittmoning (DE)
(72) Erfinder: Mayer, Georg, 84529 Tittmoning (DE)
(74) Vertreter: Bauer, Friedrich, Dipl.-Ing.

(56) Entgegenhaltungen:
- EP-A- 0 163 026
- DE-A- 2 935 493
- DE-C- 4 431 038
- DE-U- 9 319 862
- DE-U-29 511 311
- FR-A- 2 219 748
- GB-A- 1 540 999

## Beschreibung

Die Erfindung betrifft einen Futtermischwagen gemäß dem Oberbegriff des Patentanspruches 1.

Futtermischwagen dieser Art werden insbesondere in größeren landwirtschaftlichen Betrieben eingesetzt, um verschiedene Futtermittel miteinander zu mischen und dosiert am Futterplatz auszugeben. Der Futtermischwagen wird hierbei mittels einer Zugmaschine, beispielsweise mittels eines Traktors, unmittelbar vor der Viehreihe entlanggefahren, wobei die Futtermittelmischung mittels einer Querfördereinrichtung aus dem Futtermischwagen ausgebracht wird und seitlich neben den Futtermischwagen fällt.

Die zu mischenden Futtermittelarten und Mischungszusammensetzungen können in Abhängigkeit des Bedarfs und der Verfügbarkeit stark unterschiedlich sein. Als Mischungskomponenten kommen verschiedene trockene und feuchte Futtermittel in Betracht, beispielsweise Heu, Stroh, Grassilage, Maissilage, Pressschnitzel, Obst- und Gemüseschnitzel, Kraftfutter etc.

Aus der EP 0 163 026 A1 ist ein Futtermischwagen für Silage und anderes Viehfutter bekannt, bei dem hinter einem ersten Aufnahmebehälter, der mit einem Kratzboden und einer Dosiereinrichtung für Silage ausgestattet ist, ein weiterer Aufnahmebehälter für einen weiteren Futterbestandteil vorgesehen ist, der über eine bodenseitige Schneckenfördereinrichtung zu einer Behälteröffnung und von dort über ein Schleuderrad der Silage zugeführt wird, die auf ein Querförderband fällt. Die Dosierung des zusätzlichen Futterbestandteiles erfolgt dadurch, daß die Größe der Behälteröffnung durch einen Schieber verändert wird.

Nachteilig ist bei diesem bekannten Futtermischwagen, daß der zweite Aufnahmebehälter nur für bestimmte Futtermittelarten, insbesondere für Kraftfutter, einsetzbar ist. Weiterhin erfordern Schneckenförderer, wenn sie größer dimensioniert sind, einen hohen Energieaufwand. Darüber hinaus ist die Gefahr gegeben, daß zumindest Teile des darin geförderten Futtermittels vermusen, d.h. zu einem Brei zerdrückt werden. Ein weiterer Nachteil besteht darin, daß bei dem bekannten Futtermischwagen nicht dem Erfordernis Rechnung getragen werden kann, daß verschiedene Tiere innerhalb eines landwirtschaftlichen Betriebes häufig mit unterschiedlichen Mischungen versorgt werden müssen. Beispielsweise benötigen frisch abgekalbte Milchkühe eine andere Kraftfutterzugabe wie trockenstehende Kühe, Bullen, Fersen usw. Dies erfordert eine einfache und schnelle Veränderung der Futtermittelzusammensetzung.

Weiterhin ist aus der DE 29 35 493 A1 ein Futterdosierwagen mit Dosierwalzen bekannt, um Silage aus einem Silagebehälter dosiert auf ein Querförderband zu bringen. Oberhalb des Querförderbandes ist ein Zusatzbehälter für Kraftfutter angeordnet, wobei eine Förder- und Verteilerwalze, die über einen einstellbaren Klemmstein- oder Klinkenvorschub angetrieben wird, das Kraftfutter dosiert über die Breite und Länge des Querförderbandes verteilt.

Der Erfindung liegt daher die Aufgabe zugrunde, einen Futtermischwagen gemäß dem Oberbegriff des Anspruches 1 zu schaffen, der universell einsetzbar und mit einem geringen Energieaufwand betreibbar ist, das Zermusen des Futters vermeidet und die Möglichkeit eröffnet, die Futtermittelzusammensetzung einfach und schnell zu verändern.

Diese Aufgabe wird erfindungsgemäß durch die Merkmale des Anspruches 1 gelöst. Vorteilhafte Ausführungsformen der Erfindung sind in den weiteren Ansprüchen beschrieben.

Bei dem erfindungsgemäßen Futtermischwagen bestehen die Fördereinrichtungen beider Aufnahmebehälter aus jeweils einem in Längsrichtung des Futtermischwagens umlaufenden Kratzboden und die Dosiereinrichtungen beider Aufnahmebehälter aus quer zur Futtermischwagenlängsrichtung angeordneten Dosierwalzen oder Schrägförderern, die mit unterschiedlichen Fördergeschwindigkeiten betreibbar sind.

Der erfindungsgemäße Futtermischwagen ermöglicht eine Mischung der einzelnen Futtermittelkomponenten mit einem geringen Energieaufwand, da innerhalb der Aufnahmebehälter kein energieintensives 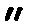 Umrühren" der Futtermittel durchgeführt wird. Die Dosiereinrichtung, beispielsweise Dosierwalze, hat lediglich sicherzustellen, daß die einzelnen Futtermittel in der gewünschten Menge auf die Quertransporteinrichtung gefördert werden. Ein weiterer Vorteil ergibt sich daraus, daß durch das fehlende Mischen innerhalb der Aufnahmebehälter ein mit dem Mischvorgang verbundenes Zermusen des Futtermittels ausgeschlossen wird.

Von besonderem Vorteil ist, daß die Dosierleistung der einzelnen Dosiereinrichtungen auf einfache und schnelle Weise verändert werden kann. So ist es beispielsweise möglich, während des Ausbringens der Futtermittelmischung eine Dosiereinrichtung völlig auszuschalten, während die andere Dosiereinrichtung weiter betrieben wird. Weiterhin ist es auch ohne weiteres möglich, eine Dosiereinrichtung mit einer geringeren Fördergeschwindigkeit als die andere Dosiereinrichtung zu betreiben. Auf diese Weise läßt sich die Futtermittelzusammensetzung entsprechend verändern und auf den unterschiedlichen Bedarf verschiedener Tiere noch während des Ausbringens des Futtermittels anpassen.

Eine relativ einfache, kostengünstige und wirkungsvolle Anordnung ergibt sich, wenn die Dosiereinrichtungen quer zur Futtermischwagenlängsrichtung angeordnete Dosierwalzen aufweisen. Dabei wird durch die Rotationsgeschwindigkeit der Dosierwalzen der Feinheitsgrad der 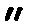 abgeschabten" Futtermittelmenge bestimmt. Durch die Zuführgeschwindigkeit der Zuführeinrichtung zu den Dosierwalzen in der Regel in Form eines sogenannten Kratzbodens kann dabei die Dosiermenge eingestellt werden.

Vor allem benötigt der erfindungsgemäß Futtermischwagen keine weitere Wiegeeinrichtung. Bei herkömmlichen Mischwägen muß nämlich in dem einzigen Behälter in der Regel eine Wiegeeinrichtung zusätzlich vorgesehen sein, um die einzelnen Komponenten mengenmäßig richtig im Behälter bereit zu stellen. Soll beispielsweise bei herkömmlichen Futterwägen eine 60%ige Grassilage mit einer 40%igen Maissilage gemischt werden, so wird über die interne Wiegeeinrichtung zunächst eine ausreichende Gewichtsmenge Gras eingefüllt (nämlich im genannten Beispiel 60% des Gesamtgewichts), um dann die noch fehlenden 40 Gewichts% mit Mais aufzufüllen. Erfindungsgemäß kann nunmehr durch die unterschiedliche Dosiermenge die entsprechende Mischmenge volumenmäßig bereit gestellt werden, ohne daß die einzelnen Komponenten in den Behältern zuvor gewogen werden müssen. Dabei kann die Dosiermenge auch in Abhängigkeit der Fahrgeschwindigkeit eingestellt werden, indem beispielsweise auch in Abhängigkeit der Fahrgeschwindigkeit der Antriebs- oder Ölmotor des Kratzbodens unterschiedlich schnell rotiert und über die unterschiedliche Geschwindigkeit des Kratzbodens dann unterschiedlich große Volumenmengen der Dosiereinrichtung und damit der Querfördereinrichtung zugeführt werden.

Ferner benötigt der erfindungsgemäße Futtermischwagen keine Schneideinrichtung insbesondere bei langer Silage. Denn bei dem erfindungsgemäßen Futtermischwagen wird durch die Förder- und Dosiereinrichtung auch die lange Silage problemlos weiter und abgegeben, wohingegen bei den herkömmlichen Futtermischwagen bei der dort notwendigen Mischeinrichtung separate Schneideinrichtungen vorgesehen sein müssen, um die lange Silage zu kürzen, damit die Mischung überhaupt befriedigend durchgeführt werden kann.

Ist es erwünscht, mehr als zwei Futtermittelarten miteinander zu mischen, ist es zweckmäßig, wenn vorzugsweise senkrecht oberhalb der Quertransporteinrichtung ein weiterer Aufnahmebehälter, insbesondere für Kraft- und Mineralfutter, vorgesehen ist. Dieser weitere Aufnahmebehälter kann eine separate Fördereinrichtung, beispielsweise in der Form einer quer angeordneten Förderschnecke, aufweisen, die in einen sich in Richtung zur Quertransporteinrichtung erstreckenden Fallkanal mündet. Mittels eines derartigen Fallkanals fällt das Kraft- oder Mineralfutter an einer vorherbestimmten Stelle auf die Quertransporteinrichtung, wo sie den anderen Futtermittelkomponenten zugemischt wird.

Alternativ wäre es jedoch auch möglich, daß der weitere Aufnahmebehälter an seiner Unterseite lediglich eine in der Öffnungsweite veränderbare Ausbringungsöffnungen aufweist, so daß je nach Öffnungsgrad mehr oder weniger Kraft- oder Mineralfutter auf die Quertransporteinrichtung fällt.

Eine genaue Dosierung der Futtermittel kann erreicht werden, wenn die Aufnahmebehälter jeweils eine vorzugsweise oberhalb der Dosiereinrichtungen angeordnete Futterrückwurfeinrichtung aufweisen, welche zusammen mit der Dosiereinrichtung den Futtermittelförderspalt begrenzt. Oberhalb der entsprechenden Dosierwalze befindliches Futtermittel wird hierdurch vom Förderspalt weg und zurück in den Aufnahmebehälter befördert, so daß ein Stau im Förderspalt vermieden werden kann.

Vorzugsweise besteht die Futterrückwurfeinrichtung aus einem vorzugsweise schräg in Längsrichtung geneigten Kratzförderband.

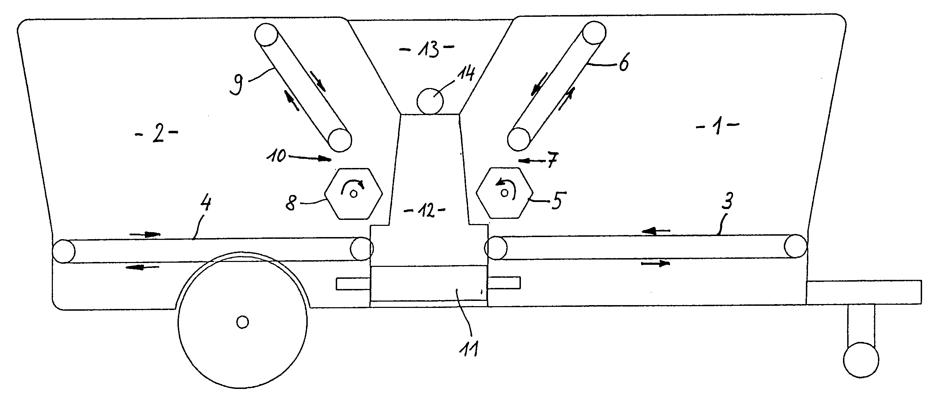

Die Erfindung wird nachfolgend anhand der Zeichnung beispielsweise näher erläutert. Die einzige Figur dieser Zeichnung zeigt eine schematische Seitenansicht des erfindungsgemäßen Futtermischwagens mit verschiedenen, teilweise innenliegenden Einzelkomponenten.

Der dargestellte Futtermischwagen ist als Einachs-Anhänger ausgebildet und kann mittels einer Zugmaschine, beispielsweise einem Taktor, verfahren werden. Die Kraftübertragung zu nachfolgend näher beschriebenen, angetriebenen Komponenten erfolgt von dieser Zugmaschine aus über einen Zapfwellenanschluß und/oder hydraulische Anschlüsse, welche nicht dargestellt sind.

Der Futtermischwagen weist einen vorderen Aufnahmebehälter 1 und einen hinteren Aufnahmebehälter 2 auf, die im wesentlichen getrennt voneinander ausgebildet sind. In den Aufnahmebehältern 1, 2 können somit unterschiedliche Futtermittelarten aufgenommen werden, ohne miteinander in Berührung zu gelangen. So ist es beispielsweise denkbar, den Behälter 1 für Grassilage und den Behälter 2 für Mais zu benutzen.

Der Aufnahmeraum des vorderen Aufnahmebehälters 1 wird nach unten durch eine Längsfördereinrichtung in Form eines Kratzbodens 3 begrenzt, der in Richtung der Pfeile bewegbar ist. In gleicher Weise ist der Aufnahmeraum des hinteren Aufnahmebehälters 2 nach unten durch einen Kratzboden 4 begrenzt, der sich auf gleicher Höhe wie der Kratzboden 3 befindet. Die Umlenkrollen der Kratzböden 3, 4 sind um zueinander parallele Drehachsen drehbar, die sich horizontal sowie quer zur Längsrichtung des Futtermischwagens erstrecken. Weiterhin reicht der vordere Kratzboden 3 bis zum vorderen Ende des Aufnahmebehälters 1, während sich der hintere Kratzboden 4 bis zum hinteren Aufnahmebehälters 2 erstreckt. Die anderen, einander zugekehrten Enden der Kratzböden 3, 4 weisen dagegen einen vorbestimmten Abstand voneinander auf.

Nach hinten wird der Aufnahmeraum des vorderen Aufnahmebehälters 1 im wesentlichen durch eine Dosierwalze 5 und ein Kratzförderband 6 begrenzt.

Die Dosierwalze 5 dreht sich im Gegenuhrzeigersinn um eine querverlaufende Drehachse, wie durch den Pfeil angedeutet. Um ein Greifen des auf dem Kratzboden 3 herangeführten Futtermittels sicherzustellen und dieses durch einen Förderspalt 7 zwischen der Dosierwalze 5 und dem unteren Umlenkbereich des Kratzförderbands 6 hindurchzuführen, weist die Dosierwalze 5 zweckmäßigerweise an ihrem Außenumfang radial abstehende oder in einem bestimmten Winkel zu diesem angeordnete, nicht dargestellte Zähne oder Rippen auf. Ferner ist die Dosierwalze 5 derart positioniert und ausgebildet, daß sich ihre Drehachse etwa senkrecht oberhalb der hinteren Umlenkrolle des vorderen Kraftbodens 3 befindet und zwischen der Dosierwalze 5 und dem Kratzboden 3 kein oder nur sehr wenig Futtermittel hindurchtreten kann.

Anstelle der Dosierwalze 5 kann ohne weiteres auch eine andere Dosiervorrichtung, wie beispielsweise ein Schrägförderer, der ähnlich wie eine Kratzfördereinrichtung ausgebildet und an quer verlaufenden Schienen Zinken aufweisen kann, vorgesehen werden.

Das Kratzförderband 6 kann ähnlich wie der Kratzboden 3 ausgebildet sein und bewegt sich ebenfalls im Gegenuhrzeigersinn, wie durch die Pfeile dargestellt. Die untere Umlenkrolle des Kratzförderbandes 6 ist im Bereich oberhalb der Dosierwalze 5 angeordnet, während die obere Umlenkrolle in Längsrichtung des Futtermischwagens nach vorne versetzt ist, so daß das Kratzförderband nach vorne geneigt ist. Aufgrund dieser Anordnung kann von der Dosierwalze 5 eine genau dosierbare Menge durch den Förderspalt 7 gefördert werden, während oberhalb des Förderspalts 7 liegendes Futtermittel vom unteren Teil des Kratzförderbandes 6 nach oben und nach vorne gefördert wird, so daß Stauungen im Förderspalt 7 vermieden werden.

In ähnlicher, symmetrischen Weise ist der Aufnahmeraum des hinteren Aufnahmebehälters 2 nach vorne durch eine im Uhrzeigersinn drehbare Dosierwalze 8 und ein Kratzförderband 9 begrenzt, die einen dazwischenliegenden Förderspalt 10 nach unten und oben begrenzen. Das Kratzförderband 9 ist in Richtung zum oberen Ende nach hinten geneigt, dreht sich im Uhrzeigersinn, wie durch die Pfeile angedeutet, und wirkt mit der Dosierwalze 8 in gleicher Weise wie das Kratzförderband 6 mit der Dosierwalze 5 zusammen. Anstelle der Dosierwalze 8 kann wiederum ein Schräg- oder Kratzförderer vorgesehen werden, wie dies bereits als Alternative zur Dosierwalze 5 beschrieben wurde.

Im dargestellten Ausführungsbeispiel sind der Kratzboden 3, die Dosierwalze 5 und das Kratzförderband 6 des vorderen Aufnahmebehälters 1 symmetrisch zum Kratzboden 4, zu der Dosierwalze 8 bzw. zum Kratzförderband 9 des hinteren Aufnahmebehälters 2 bezüglich einer vertikalen Querebene angeordnet, die sich etwa in der Mitte des Futtermischwagens, in Längsrichtung gesehen, befindet. Diese symmetrische Anordnung gilt auch im wesentlichen für den vorderen Aufnahmebehälter 1 und den hinteren Aufnahmebehälter 2. Weiterhin sind die einander entsprechenden Teile des vorderen und hinteren Aufnahmebehälters im wesentlichen gleich dimensioniert, können jedoch bei Bedarf auch unterschiedliche Abmessungen aufweisen.

Zwischen dem vorderen Aufnahmebehälter 1 und dem hinteren Aufnahmebehälter 2 ist unterhalb der Kratzbodenebene ein Querförderband 11 vorgesehen, das sich über die gesamte Breite des Futtermischwagens erstreckt. Oberhalb des Querförderbandes 11 befindet sich ein Freiraum 12, der mit den Förderspalten 7 und 10 in Verbindung steht, so daß die durch diese Förderspalte geförderten Futtermittel auf das Querförderband 11 fallen können und von diesem seitlich aus dem Futtermischwagen herausgefördert werden können. Die verschiedenen Futtermittel aus dem vorderen Aufnahmebehälter 1 und dem hinteren Aufnahmebehälter 2 werden somit erst im Freiraum 12 bzw. auf dem Querförderband 11 gemischt. Es ist jedoch auch möglich, innerhalb der Aufnahmebehälter 1, 2 zusätzlich Mischaggregate vorzusehen.

Der Freiraum 12 muß sich vertikal nach oben lediglich bis etwa zur Höhe der Förderspalte 7, 10 erstrecken, wobei dies im gezeigten Ausführungsbeispiel etwa die halbe Höhe der Aufnahmebehälter 1, 2 ist.

Oberhalb des Freiraumes 12 und zwischen den Aufnahmebehältern 1 und 2 ist ein weiterer Aufnahmebehälter 13 vorgesehen, der von den vorgenannten Aufnahmebehältern 1, 2 ebenfalls abgetrennt ist. Dieser Aufnahmebehälter 13 dient zur Aufnahme einer oder mehrerer zusätzlichen Futtermittelkomponenten, beispielsweise Kraft- und Mineralfutter, wenn der Aufnahmebehälter 13 mehrfach unterteilt ist (beispielsweise quer zu seiner Förderschnecke). Diese Futtermittelkomponente wird mittels einer quer verlaufenden Förderschnecke 14 ausgetragen, die seitlich über den Futtermischwagen überstehen kann. Diese Förderschnecke 14 ist derart angeordnet, daß die Futtermittelkomponente entweder auf das Querförderband 11 oder über dieses seitlich hinaus direkt zur Futterstelle fällt. Um ein zu breites Streuen dieser Futtermittelkomponente zu vermeiden, kann die Förderschnecke an ihrem äußeren Ende in ein nicht dargestelltes Fallrohr münden, in welchem die Futtermittelkomponente nach unten fällt.

Die Umdrehungsgeschwindigkeiten der Dosierwalzen 5 und 8 können unabhängig voneinander verändert werden. Bevorzugt bleibt aber die Umdrehungsgeschwindigkeit der Dosierwalzen fest eingestellt und unveränderlich, wohingegen die Fördergeschwindigkeit der den Dosierwalzen vorgelagerten Kratzböden verändert wird oder verändert eingestellt werden kann. Darüber ist es dann möglich, unterschiedliche Dosierleistungen des vorderen Aufnahmebehälters 1 und des hinteren Aufnahmebehälters 2 zu erhalten. In gleicher Weise kann auch die Förderleistung der Förderschnecke 14 unabhängig von der Dosierleistung der Dosierwalzen 5 und 8 eingestellt werden. Es ist daher möglich, von der Zugmaschine aus die Futtermittelzusammensetzung jederzeit zu verändern.

Alternativ zum dargestellten Ausführungsbeispiel ist es auch möglich, anstelle des mittigen Querförderbandes 11 andere Quertransporteinrichtungen, beispielsweise eine Querförderschnecke oder -rutsche, vorzusehen. Weiterhin wären auch Aufnahmebehälter denkbar, die sich nicht, wie im gezeigten Ausführungsbeispiel, über die gesamte Breite des Futtermischwagens erstrecken, sondern in Querrichtung nebeneinander liegen. Beispielsweise könnten zwei in Querrichtung nebeneinanderliegende Aufnahmebehälter 13 für verschiedene Kraftfutterarten zwischen dem vorderen Aufnahmebehälter 1 und dem hinteren Aufnahmebehälter 2 vorgesehen sein, um wahlweise die eine oder andere Kraftfutterart auf das Querförderband 11 zu fördern oder fallen zu lassen. Ferner können die Dosierwalzen 5, 8 nicht nur quer zur Längsrichtung des Futtermischwagens angeordnet sein, sondern auch parallel hierzu, falls sie beispielsweise in der Form von Förderschnecken ausgebildet sind. In diesem Fall könnten die Kratzböden 3, 4 entfallen.

## Patentansprüche

1. Futtermischwagen mit mindestens zwei, mit unterschiedlichen Futtermitteln befüllbaren Aufnahmebehältern (1, 2), die in Längsrichtung des Futtermischwagens hintereinander angeordnet sind und jeweils eine Fördereinrichtung zum Fördern der Futtermittel in Richtung einer das Ausbringen der Futtermittel aus dem Futtermischwagen bewirkenden, zwischen den beiden Aufnahmebehältern (1, 2) angeordneten Quertransporteinrichtung sowie jeweils eine Dosiereinrichtung zum dosierten zuführen der Futtermittel zur Quertransporteinrichtung aufweisen, wobei die Dosierleistung der einem Aufnahmebehälter (1, 2) zugeordneten Dosiereinrichtung unabhängig von der Dosierleistung der einem anderen Aufnahmebehälter (2, 1) zugeordneten Dosiereinrichtung steuerbar ist, **dadurch gekennzeichnet**, daß die Fördereinrichtungen beider Aufnahmebehälter (1, 2) aus jeweils einem in Längsrichtung des Futtermischwagens umlaufenden Kratzboden (3, 4) und die Dosiereinrichtungen beider Aufnahmebehälter (1, 2) aus quer zur Futtermischwagenlängsrichtung angeordneten Dosierwalzen (5, 8) oder Schrägförderern bestehen, die mit unterschiedlichen Fördergeschwindigkeiten betreibbar sind.

2. Futtermischwagen nach Anspruch 1, **dadurch gekennzeichnet**, daß die Quertransporteinrichtung aus einem Querförderband (11), einer Förderschnecke oder -rutsche besteht.

3. Futtermischwagen nach Anspruch 1 oder 2, **dadurch gekennzeichnet**, daß vorzugsweise senkrecht oberhalb der Quertransporteinrichtung (11) ein weiterer Aufnahmebehälter (13), insbesondere für Kraft- und Mineralfutter, vorgesehen ist.

4. Futtermischwagen nach Anspruch 3, **dadurch gekennzeichnet**, daß der weitere Aufnahmebehälter (13) eine separate Fördereinrichtung zum dosierten Fördern des im Aufnahmebehälter (13) enthaltenen Futtermittels auf die Quertransporteinrichtung (11) oder zum dosierten Ausbringen des Futtermittels aus dem Futtermischwagen aufweist.

5. Futtermischwagen nach Anspruch 4, **dadurch gekennzeichnet**, daß die Fördereinrichtung des weiteren Aufnahmebehälters (13) aus einem Querförderband oder einer Förderschnecke (14) besteht.

6. Futtermischwagen nach Anspruch 4 oder 5, **dadurch gekennzeichnet**, daß die Fördereinrichtung (14) des weiteren Aufnahmebehälters (13) in einen Fallkanal mündet, der sich in Richtung der Quertransporteinrichtung (11) erstreckt.

7. Futtermischwagen nach Anspruch 3, **dadurch gekennzeichnet**, daß der weitere Aufnahmebehälter (13) an seiner Unterseite eine in der Öffnungsweite veränderbare Ausbringungsöffnung aufweist.

8. Futtermischwagen nach einem der vorhergehenden Ansprüche, **dadurch gekennzeichnet**, daß innerhalb des Aufnahmebehälters (1, 2) eine vorzugsweise oberhalb der Dosiereinrichtungen (5, 8) angeordnete Futterrückwurfeinrichtung vorgesehen ist, welche zusammen mit der Dosiereinrichtung (5, 8) den Futtermittelförderspalt (7, 10) begrenzt.

9. Futtermischwagen nach Anspruch 8, **dadurch gekennzeichnet**, daß die Futterrückwurfeinrichtung aus einem vorzugsweise schräg in Längsrichtung geneigten Kratzförderband (6, 9) besteht.

10. Futtermischwagen nach einem der vorhergehenden Ansprüche, **dadurch gekennzeichnet**, daß die Quertransporteinrichtung (11) in Längsrichtung des Futtermischwagens mittig zwischen den Aufnahmebehältern (1, 2) angeordnet ist.

11. Futtermischwagen nach einem der vorhergehenden Ansprüche, **dadurch gekennzeichnet**, daß die Aufnahmebehälter (1, 2), Dosiereinrichtungen, Fördereinrichtungen und/oder Futterrückwurfeinrichtungen symmetrisch zu einer querverlaufenden, vorzugsweise mittigen Vertikalebene des Futtermischwagens angeordnet sind.

12. Futtermischwagen nach einem der vorhergehenden Ansprüche, **dadurch gekennzeichnet**, daß die Dosiereinrichtungen ferner mit unterschiedlicher Geschwindigkeit antreibbare Fördereinrichtungen, vorzugsweise in Form von Kratzböden, zur Weiterförderung des jeweiligen Futtermittels zur Quertransporteinrichtung umfassen.

## Claims

1. A mobile mixer feeder comprising at least two receiving containers (1 and 2) able to be filled with different feedstuffs and which are arranged in the longitudinal direction of the mobile mixer feeder in tandem and each comprise a conveying device for conveying the feedstuff toward a transverse feed device adapted to expel the feedstuff from the mobile mixer feeder and arranged between the two receiving containers (1 and 2), and furthermore a metering device for the metered supply of such feedstuffs to the transverse feed device, the metering rate of the metering device associated with the one receiving container (1 and 2) being able to be set in a manner independent of the metering rate of the metering device associated with the other receiving container (2 and 1), characterized in that the conveying devices of both receiving containers (1 and 2) comprise respectively a floor conveyor (3 and 4) running round in the longitudinal direction of the mobile mixer feeder and the metering devices of both receiving containers (1 and 2) are made up of metering rolls (5 and 8) arranged athwart the longitudinal direction of the mobile mixer feeder or of oblique conveying devices, which are adapted to be operated at different rates of conveying.

2. The mobile mixer feeder as claimed in claim 1, characterized in that the transverse feed device comprises a transverse conveyor belt (11), a conveying auger or a conveying chute.

3. The mobile mixer feeder as claimed in claim 1 or in claim 2, characterized in that, preferably vertically above the transverse feed device (11), a further receiving container (13) is provided which is preferably for feedstuff concentrate or mineral supplements.

4. The mobile mixer feeder as claimed in claim 3, characterized in that the further receiving container (13) possesses a separate conveying device for the metered conveying of the feedstuff contained in the receiving container (13) or for metered output of the feedstuff from the mobile mixer feeder.

5. The mobile mixer feeder as claimed in claim 4, characterized in that the conveying device of the further receiving container (13) comprises a transverse conveyor belt or a conveying auger (14).

6. The mobile mixer feeder as claimed in claim 4 or in claim 5, characterized in that the conveying device (14) of the further receiving container (13) opens into a vertical drop passage extending toward the transverse conveying device (11).

7. The mobile mixer feeder as claimed in claim 3, characterized in that the further receiving container (13) possesses an outlet opening having a adjustable opening size.

8. The mobile mixer feeder as claimed in any one of the preceding claims, characterized in that a feedstuff throw-back device is provided within the receiving container (1 and 2) and is preferably arranged above the metering devices (5 and 8), said feedstuff throw-back device delimiting, together with the metering device (5 and 8) the feedstuff conveyance gap (7 and 10).

9. The mobile mixer feeder as claimed in claim 8, characterized in that the feedstuff throw-back device comprises a floor conveyor (6 and 9) which is preferably inclined obliquely in the longitudinal direction.

10. The mobile mixer feeder as claimed in any one of the preceding claims, characterized in that the transverse feed device (11) is arranged in the longitudinal direction of the mobile mixer feeder centrally between the receiving containers (1 and 2).

11. The mobile mixer feeder as claimed in any one of the preceding claims, characterized in that the receiving containers (1 and 2), metering devices, conveying devices and/or feedstuff throw-back devices are arranged symmetrically to a transversely extending and preferably central vertical plane of the mobile mixer feeder.

12. The mobile mixer feeder as claimed in any one of the preceding claims, characterized in that the metering devices furthermore comprise conveying devices able to be driven at different speed, such further conveying devices preferably being in the form of floor conveyors, for further conveyance of the respective feedstuff in relation to the transverse feed device.

## Revendications

1. Chariot mélangeur et distributeur, en particulier pour aliments destinés au bétail, comportant deux récipients (1, 2) susceptibles d'être remplis avec différents produits alimentaires, qui sont agencés l'un derrière l'autre en direction longitudinale du chariot mélangeur et distributeur et qui présentent chacun un dispositif de transport pour transporter les produits alimentaires en direction d'un dispositif de transport transversal assurant la distribution des produits alimentaires hors du chariot mélangeur et distributeur et agencé entre les deux récipients (1, 2), ainsi qu'un dispositif de dosage pour l'amenée dosée des produits alimentaires jusqu'au dispositif de transport transversal, dans lequel la capacité de dosage du dispositif de dosage associé à l'un des récipients (1, 2) peut être commandée indépendamment de la capacité de dosage du dispositif de dosage associé à l'autre récipient (2, 1), caractérisé en ce que les dispositifs de transport des deux récipients (1, 2) sont constitués respectivement par un fond racleur (3, 4) circulant en direction longitudinale du chariot mélangeur et distributeur, et en ce que les dispositifs de dosage des deux récipients (1, 2) sont constitués par des cylindres de dosage (5, 8) ou par des transporteurs obliques agencés transversalement à la direction longitudinale du chariot mélangeur et distributeur, qui peuvent être entraînés à différentes vitesses de transport.

2. Chariot mélangeur et distributeur selon la revendication 1, caractérisé en ce que le dispositif de transport transversal est constitué par une bande de transport transversale (11), par une vis ou un toboggan de transport.

3. Chariot mélangeur et distributeur selon l'une ou l'autre des revendications 1 et 2, caractérisé en ce qu'il est prévu, de préférence verticalement au-dessus du dispositif de transport transversal (11), un autre récipient (13), en particulier pour des aliments concentrés ou minéraux.

4. Chariot mélangeur et distributeur selon la revendication 3, caractérisé en ce que l'autre récipient (13) présente un dispositif de transport séparé pour le transport dosé du produit alimentaire contenu dans le récipient (13) jusque sur le dispositif de transport transversal (11) ou pour la distribution dosée du produit alimentaire hors du chariot mélangeur et distributeur.

5. Chariot mélangeur et distributeur selon la revendication 4, caractérisé en ce que le dispositif de transport de l'autre récipient (13) est constitué par une bande de transport transversale ou par une vis de transport (14).

6. Chariot mélangeur et distributeur selon l'une ou l'autre des revendications 4 et 5, caractérisé en ce que le dispositif de transport (14) de l'autre récipient (13) débouche dans un canal de chute qui s'étend en direction du dispositif de transport transversal (11).

7. Chariot mélangeur et distributeur selon la revendication 3, caractérisé en ce que l'autre récipient (13) présente sur sa face inférieure une ouverture de distribution de largeur variable.

8. Chariot mélangeur et distributeur selon l'une quelconque des revendication précédentes, caractérisé en ce qu'il est prévu, à l'intérieur du récipient (1, 2), un dispositif de rejet et de retour pour les aliments, agencé de préférence au-dessus des dispositifs de dosage (5, 8), qui délimite conjointement avec le dispositif de dosage (5, 8) la fente de transport (7, 10) pour les aliments.

9. Chariot mélangeur et distributeur selon la revendication 8, caractérisé en ce que le dispositif de rejet et de retour pour les aliments est constitué par une bande de transport à raclage (6, 9) inclinée de préférence en oblique en direction longitudinale.

10. Chariot mélangeur et distributeur selon l'une quelconque des revendications précédentes, caractérisé en ce que le dispositif de transport transversal (11) est agencé en direction longitudinale du chariot mélangeur et distributeur au milieu entre les récipients (1, 2).

11. Chariot mélangeur et distributeur selon l'une quelconque des revendications précédentes, caractérisé en ce que les récipients (1, 2), les dispositifs de dosage, les dispositifs de transport et/ou les dispositifs de rejet et de retour pour les aliments sont agencés symétriquement par rapport à un plan vertical transversal préférablement médian du chariot mélangeur et distributeur.

12. Chariot mélangeur et distributeur selon l'une quelconque des revendications précédentes, caractérisé en ce que les dispositifs de dosage comportent en outre des dispositifs de transport susceptibles d'être entraînés à différentes vitesses, de préférence sous forme de fonds racleurs pour poursuivre le transport du produit alimentaire jusqu'au dispositif de transport transversal.
